# EUROPEAN PATENT APPLICATION

(11) **EP 1 637 264 A1**
(43) Date of publication of application: **22.03.2006**
(21) Application number: 05019757.3
(22) Date of filing: 12.09.2005
(51) Int. Cl.: B23D 61/02

(54) **Circular saw blade made of composite material**

(30) Priority: 17.09.2004 US 611046 P; 02.09.2005 US 218732
(71) Applicant: Black & Decker Inc., Newark, Delaware 19711 (US)
(72) Inventor: Lowder, Jeremy Allen, Boone, North Carolina 28607 (US)
(74) Representative: Bell, Ian Stephen

(57) **Abstract**

A composite circular saw blade. In an exemplary embodiment, a circular saw blade (100) includes a body (105) generally circular in shape including an aperture (115) and an outer periphery. The aperture being generally defined in the center of the body and configured to be at least partially received by a circular saw arbor body. Further, a plurality of teeth are (110) disposed around the outer periphery of the body for providing a cutting edge. The body is formed of a composite material, the composite material including two or more structurally complementary substances in which one of the two or more structurally complementary substances is a matrix material.

## Description

The present application claims the benefit under 35 U.S.C. § 119(e) of U.S. Provisional Patent Application Serial No. 60/611,046, entitled "Composite Circular Saw Blade," filed September 17, 2004 which is herein incorporated by reference in its entirety.

The present invention generally relates to the field of power tools, and particularly to a saw blade, such as a circular saw blade.

Circular saws are useful for cutting a variety of materials including wood, metal, masonry, and glass. Such an array of materials may be cut by a single type of circular saw due to the vast number of circular saw blades currently available. Each circular saw blade is generally built for a specific purpose. For example, an abrasive saw blade may be used for cutting masonry and metals while a diamond saw blade is configured to cut glass, concrete or ceramic material. Further, a saw blade with few teeth and a large gullet is often employed to make a rip cut (i.e., a cut with the wood grain) while a blade with many teeth (forty-eight or more) and a small gullet is used for making a cross cut (i.e., a cut across the wood grain).

The life and performance of a saw blade is highly dependent upon the materials from which the saw blade is manufactured. In order to increase saw blade life and performance, a number of modifications have been made to the conventional metal circular saw blade. First, tips composed of a highly durable material such as carbide may be added to saw blade teeth. Such addition significantly increases the life of the saw blade when compared to a steel or high-speed steel blade without such tips for carbide tips do not dull as quickly and thus, may be used for a longer period, In addition, the body of the saw blade may be coated with a frictionless material to reduce blade friction (e.g., heat) during use and thus, extend the life of the blade. Further, one or more expansion slots may be defined along the outer perimeter of the blade to allow blade expansion to occur during saw operation without resulting in blade deformation.

Although the modifications to the traditional circular saw blade have increased the life and performance of such blade, such modifications result in increased production costs, for additional labor, materials, and processing are required. For example, coating the saw blade body with a frictionless synthetic material increases the cost of the saw blade due to the cost of the material as well as the labor involved with the process.

Therefore, it would be desirable to develop a manufacturing process which may reduce production costs and promote efficient manufacturing of a circular saw blade. Such process may include the use of alternative materials such as polymers for the saw blade body.

Accordingly, the present invention provides a saw blade composed of composite material. In a first aspect of the present invention, a circular saw blade includes a body generally circular in shape including an aperture and an outer periphery. The aperture being generally defined in the center of the body and configured to be at least partially received by a circular saw arbor body. Further, a plurality of teeth are disposed around the outer periphery of the body for providing a cutting edge. The body is formed of a composite material, the composite material including two or more structurally complementary substances in which one of the two or more structurally complementary substances is a matrix such as an adhesive binder.

In a further aspect of the present invention, a saw blade for cutting a fibrous material is disclosed. In the present aspect, the saw blade includes a body which is generally circular in shape and includes a centered aperture and a plurality of teeth. The centered aperture is configured to be at least partially received by a saw arbor. Further, the plurality of teeth are disposed around an outer periphery of the body. In addition, a plurality of tips are affixed to the plurality of teeth. The body and the plurality of teeth are composed of a composite material and the plurality of tips affixed to the plurality of teeth provide a cutting edge capable of cutting fibrous material.

In an additional aspect of the present invention, a method for manufacturing a saw blade is provided. The present aspect includes forming mold form configured to generate a saw blade including a generally circular main body and a plurality of teeth. The plurality of teeth is disposed around an outer periphery of the main body and provides a cutting edge. Further, the mold is configured to provide a main body which includes at least a centered aperture for allowing the blade to be connected to a circular saw arbor. In addition, the aspect includes selecting a composite material for the main body of the saw blade. The composite material including two or more structurally complementary substances in which one of the two or more structurally complementary substances is an adhesive binder. For example, the adhesive binder is a polymeric material. The composite material is then placed (e.g., injected) within the mold to form a composite circular saw blade in which the plurality of teeth are integral to the main body of the saw blade.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

The numerous advantages of the present invention may be better understood by those skilled in the art by reference to the accompanying figures in which:
FIG. 1 is an isometric view of a composite circular saw blade in accordance with an exemplary embodiment of the present invention;
FIG. 2 is a partial isometric view of a composite circular saw blade, wherein the circular saw blade includes carbide tips;
FIG. 3 is a flow chart illustrating a method of manufacturing of a saw blade in accordance with an exemplary embodiment of the present invention, wherein the body and cutting edge of the saw blade are composed of composite material; and
FIG. 4 is a flow chart illustrating an additional method of manufacturing of a saw blade in accordance with an exemplary embodiment of the present invention, wherein body is composed of composite material.

Reference will now be made in detail to the presently preferred embodiments of the invention, examples of which are illustrated in the accompanying drawings. In general, the present invention provides a composite circular saw blade. The use of composite material is advantageous for it allows manufacturing of a saw blade to be simplified. For example, both the main body of the saw as well as the cutting edge may be manufactured simultaneously. Such simplification may result in reduced manufacturing costs when compared to costs associated with manufacturing of conventional saw blades. Further, the use of composite materials may assist in increasing the useful lifespan of the saw blade without requiring additional manufacturing steps. For example, the composite material of the present invention may also reduce friction, thereby assisting in avoiding heat build up on the blade as it passes through a workpiece without requiring the blade to be coated with a substantially frictionless material post blade production.

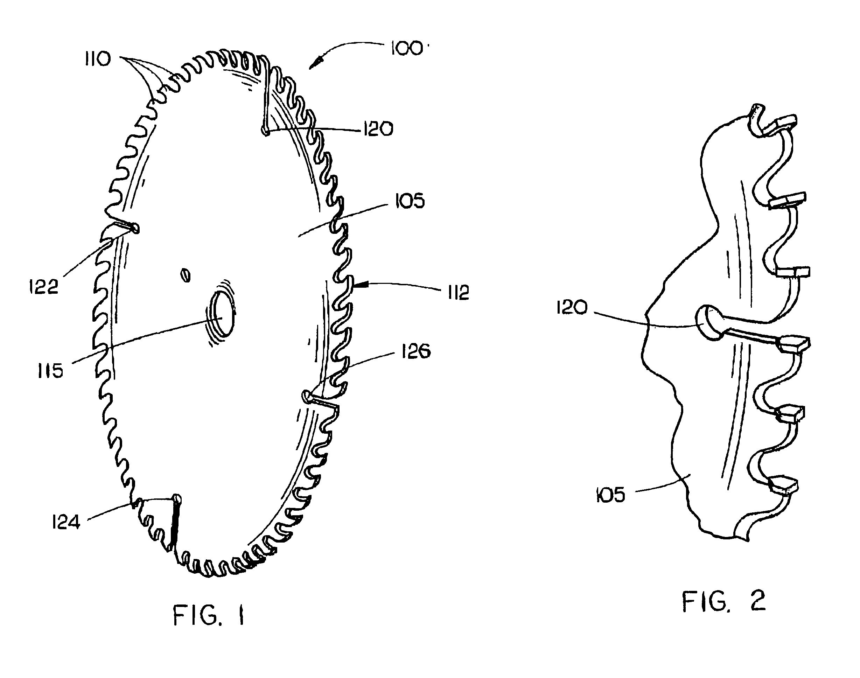

Referring to FIGS. 1 and 2, a circular saw blade 100 in accordance with an exemplary embodiment is provided in which such blade 100 is composed of a composite material. In the present embodiment, the circular saw blade 100 includes a body 105 generally circular in shape which is configured to support a cutting edge (e.g., a plurality of teeth 110) and allow the saw blade 100 to be at least partially received by a saw arbor. As illustrated in FIG. 1, a plurality of teeth 110 is disposed around the outer periphery of the body 105 for providing a cutting edge. Further, an aperture 115 is generally defined in the center of the body 105 for allowing the saw blade 100 to be mechanically connected to a circular saw arbor. In use, the saw blade 100 is connected to the arbor via at least partially inserting the arbor through the aperture 115 and then, securing the aperture with fasteners such as a washer and nut.

In an exemplary embodiment, the saw blade body 105 is formed of a composite material. Composite material is defined as including two or more structurally complementary substances in which one of the two or more structurally complementary substances serves as a matrix (e.g., an adhesive binder). For example, the adhesive binder may be a substantially frictionless material. Substantially frictionless material includes materials which in use do not generate sufficient heat to affect saw blade performance(e.g., the blade does not reach a temperature which generates sufficient friction between the blade and workpiece and thus, do not require a frictionless coating be applied to the blade in order to avoid blade deformation or wobble). For example, the coefficient of friction for a composite blade formed of a substantially frictionless material is approximately similar to that of a metal blade coated with a frictionless material such as polytetrafluoroethylene (PTFE) post blade formation. In exemplary embodiments, the saw blade body 105 is formed of polymeric material reinforced with glass fibers, carbon fibers, or the like.

It is contemplated that additional substances which provide sufficient rigidity to support the functional operation of the composite saw blade 100 may be used to form the composite without departing from the scope and spirit of the present invention. For example, aluminum reinforced with carbon fibers may be used to establish the body of the saw blade. Further, the organization of the fibers of the reinforcing materials may vary depending upon the desired structural strength. For instance, the fibers may be woven, random, unidirectional or a combination thereof. Further, glass flakes in addition to glass fibers may be employed to reinforce the matrix material.

It is further contemplated that the saw blade body 105 may be a single, solid body composed of a composite material or the body may include a number of layers. Such layers may include the same material or a combination of varying composite materials. For example, a first layer may include polymeric material reinforced with glass fibers while a second layer includes polymeric material reinforced with carbon fibers. In such example, a metallic element may also be included within one or all of the layers.

With continued reference to FIGS. 1 and 2, the body 105 is configured to support a cutting edge 112 (e.g., a plurality of teeth 110). In an exemplary embodiment, the plurality of teeth 110 are integral with the body 105 and define the cutting edge 112 for the composite circular saw blade 100. For example, the body and the plurality of teeth may be co-molded. The plurality of teeth and body may be formed of the same composite material, different composite material, or a composite material and metal combination (e.g., the body is a polymeric material reinforced with glass while the plurality of teeth are formed of steel).

In an alternative embodiment, the plurality of teeth 110 may be attached to the body 105 subsequent to the saw blade body 105 formation. For instance, teeth receiving recesses may be defined along the outer periphery of the saw blade body 105 allowing a plurality of teeth to be mechanically coupled to the saw blade body 105. Further, the present invention may connect the body 105 with saw teeth or blade segment sections as described in United States Patent Application 60/611,174 entitled: Segmented Circular Saw Blade, filed on September 17, 2004, which is herein incorporated by reference in its entirety. Such configuration allows a single saw blade body 105 to accommodate multiple teeth patterns. In addition, individual teeth may be replaced as needed prolonging the overall life of the saw blade. It is understood that the individual teeth or blade segment(s) including teeth may be composed of similar (e.g., composite material) or different material (e.g., metal) as that of the body 105.

In exemplary embodiments, the plurality of teeth 110 are typically designed and ground to suit a particular application. For example, the dimensional characteristics, such as the length, width, and tooth angle, may be varied to accommodate the use of a blade to accomplish a specific task. The standard flat top tip configuration, as illustrated in FIG. 1, is primarily employed to perform rip cuts. Such configuration includes longer teeth and deep gullets between each tooth in order to prevent debris build-up and thus, the generation of friction (e.g., heat) during blade operation. The use of the deep gullets and larger tooth size is advantageous for such features minimize the amount of heat generated during blade use and thus, reduces the likelihood of blade deformation occurring. Alternatively, blades including smaller teeth and shallower gullets may be used to accomplish finishing cross cuts on fibrous material such as wood. In addition, the plurality of teeth may be arranged at a positive hook angle. The positive hook angle primarily helps move the work material through the blade while also having a slight effect on drawing the material into the blade.

In addition to varying tooth length, width, and angle, the number of teeth included on the blade may vary depending upon the type of cut to be made or the material to be. For example, the number of teeth 110 may vary ranging from two to four hundred. A saw blade with thirty or less teeth is typically employed to perform a rip cut on fibrous material, while a blade with forty-eight or more teeth is generally used to generate a cross-cut on such material. In further embodiments, the alignment or set of the plurality of teeth relative to one another may be varied. In one embodiment, the plurality of teeth may be set to present a substantially planar cutting edge. Alternatively, it may be preferable in certain situations to set the teeth in a staggered manner relative to one another. The staggered tooth configuration may present the teeth at various angles relative to one another.

It is contemplated that the outer diameter established by the saw blade body 105 including the plurality of teeth 110 may range between three and three-eighths inches to forty inches. Thus, the composite circular saw blade 100 may be configured for use with a variety of saws ranging from small handheld circular saws to larger industrial style saws. Although the present disclosure focuses upon a circular saw blade, it is to be understood that the disclosed invention may be employed to generate blades for a variety of saw assemblies. For example, Dado Blades and Dado Chippers may be formed using composite material. It is also to be understood that the disclosed saw blade may be configured to cut materials in addition to fibrous material including masonry, glass, ceramic, metal, and the like.

In additional exemplary embodiments, the composite circular saw blade 100 may include a variety of apertures for noise and heat reduction, aesthetics, and the like. For example, the saw blade body 104 may include noise reducing apertures for attenuation of the sound level generated during blade operation. Such apertures may be generally in the shape of the letter "S." Further, as illustrated in FIG. 1, the saw blade 100 may include heat expansion apertures which assist in dissipating the heat generated during blade operation and thus, prevent blade deformation and wobble in the blade during operation of a saw. As illustrated in FIG. 1, the saw blade 100 includes four heat expansion slots 120, 122, 124, and 126. It is understood that the number and configuration of these expansion slots may vary depending upon the composition of both the saw blade body and plurality of teeth. For example, a saw blade body and plurality of teeth formed of substantially frictionless material may not require the presence of heat expansion apertures for such composition may generate only a slight amount, if any, heat during use. Alternatively, a composite blade body including steel teeth may include a plurality of heat expansion apertures/slots around the outer periphery of the blade to allow the teeth to expand during operation without causing blade deformation. In addition, the attachment of carbide tips to teeth composed of a composite or other substance (e.g. metal) may require the presence of heat expansion apertures/slots to allow for teeth expansion during operation.

In even further exemplary embodiment, the saw blade 100 may include additional features which may increase the performance and the life of such blade. As illustrated in FIG. 2, a plurality of tips may be mechanically coupled to the plurality of teeth 110. In a preferred embodiment, the plurality of tips are carbide tips. Use of carbide tips or tips constructed of a similar highly durable material may significantly increases the life of the saw blade when compared to a steel or high-speed steel blade without such tips for the tips do not dull as quickly and thus, may be used for a longer period. The size, thickness, shape, and other structural characteristics of the carbide tips may vary depending upon material to be cut, type of cut, and the like. It is contemplated that a variety of methods may be used to connect a tip with an individual tooth including welding technologies, such as sonic welding, adhesives, such as epoxies, or a combination thereof.

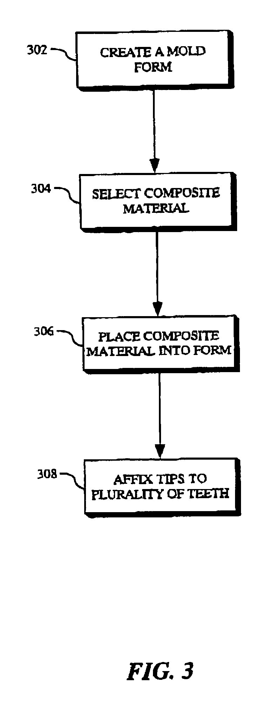

Referring now to FIG. 3, a method 300 of manufacturing a circular saw blade is provided. The method 300 of manufacturing a saw blade includes forming a mold 302. Such mold form is configured to generate a saw blade including a main body which is generally circular and a plurality of teeth disposed around an outer periphery of the main body. In an exemplary embodiment, the main body includes at least a centered aperture for allowing the blade to be connected to a circular saw arbor. In additional embodiments, the mold form may be designed to generate a main saw blade body with additional apertures such as for noise or heat reduction. Further, the method 300 includes selecting a composite material 304. For instance, a composite material for the saw blade is to be selected. Such material may include a substantially frictionless material which allows the amount of friction generated between the blade and a workpiece during blade operation to be reduced. As described previously, a variety of substances may be used to form the composite material including polymeric material reinforced with glass fibers, polymeric material reinforced with carbon fibers, and the like. In addition, the method 300 includes placing the composite material within the mold form 306. Such process may be accomplished by injecting the composite material into the mold. The resulting saw blade includes a body and cutting edge (e.g., plurality of teeth) composed of a composite material. Further, the plurality of teeth are integral with the saw blade body. Following blade formation, a plurality of tips may be affixed to the plurality of teeth, 308. It is contemplated that various methods may be employed to secure the tips to the plurality of teeth including sonic welding, use of adhesives, or a combination thereof.

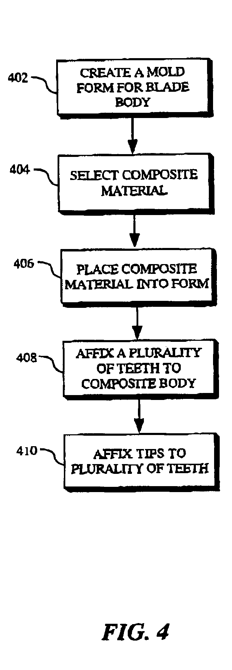

Referring to FIG. 4, an additional method 400 of manufacturing a circular saw blade is provided. The method 400 of manufacturing a saw blade includes forming a mold for the blade body 402. Such mold form is configured to generate a saw blade including a generally circular -shaped main body with at least a centered aperture configured to be received at least partially by a saw arbor and an outer periphery capable of being coupled to a plurality of teeth. In further embodiments, the mold form may be designed to generate a saw blade body with additional apertures such as for noise or heat reduction. Further, the method 400 includes selecting a composite material for the blade body 404. For instance, a composite material such as a frictionless reinforced polymeric material which minimizes the amount of friction generated between the blade and a workpiece during blade operation is selected. As described previously, a variety of substances may be used to form the composite material including polymeric material reinforced with glass fibers, polymeric material reinforce with carbon fibers, and the like. In addition, the method 400 includes placing the composite material within the mold form 406. Such process may be accomplished by injecting the composite material into the mold. The resulting saw blade includes a composite body which is capable of coupling to a cutting edge (e.g., plurality of teeth). Following body formation, a plurality of teeth are affixed to the saw blade 408. It is contemplated that such teeth may be affixed to the saw body by a variety of methods including welding, use of adhesives or a combination thereof. Alternatively, if the blade body includes recesses for receiving teeth, teeth may be inserted into corresponding recesses. In a further embodiment, an additional molding step may be included which allows the plurality of teeth to be molded to the composite body. In such embodiment, the teeth may be formed of a composite material or other material including metal. The method 400 also may include the affixing of tips to the plurality of teeth 410. For example, carbide tips may be secured to the plurality of teeth via welding, adhesives, and the like.

It is contemplated that the manufacturing process herein described may be accomplished utilizing a variety of manufacturing techniques without departing from the scope and spirit of the present invention. As described above, the manufacturing process may occur via an injection molding process wherein the composite material is injected into a mold form which provides the desired circular saw blade configuration. In the alternative, the composite circular saw blade 100 may be machined out of a sheet of composite material.

In the exemplary embodiments, the methods disclosed may be implemented as sets of instructions or software readable by a device. Further, it is understood that the specific order or hierarchy of steps in the methods disclosed are examples of exemplary approaches. Based upon design preferences, it is understood that the specific order or hierarchy of steps in the method can be rearranged while remaining within the scope and spirit of the present invention. The accompanying method claims present elements of the various steps in a sample order, and are not necessarily meant to be limited to the specific order or hierarchy presented.

It is believed that the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A circular saw blade, comprising:
a body generally circular in shape including an aperture and an outer periphery, the aperture being generally defined in the center of the body and configured to be at least partially received by a circular saw arbor; and
a plurality of teeth being disposed around the outer periphery of the body for providing a cutting edge,
wherein the body is formed of a composite material, the composite material including two or more structurally complementary substances in which one of the two or more structurally complementary substances is a matrix material.

2. The circular saw blade as claimed in claim 1, wherein the matrix material is a substantially frictionless material.

3. The circular saw blade as claimed in claim 1, wherein the matrix material is a polymeric material.

4. The circular saw blade as claimed in claim 1, wherein the body is formed of polymeric material reinforced with at least one of glass fibers or carbon fibers.

5. The circular saw blade as claimed in claim 1, wherein the body includes heat expansion slots, the heat expansion slots are disposed around the outer periphery of saw blade body for allowing the plurality of teeth to expand during operation.

6. The circular saw blade as claimed in daim 1, further comprising a plurality of tips affixed to the plurality of teeth, the plurality of tips are composed of material selected from the group consisting of carbide, ceramic, steel, and composite.

7. The circular saw blade as claimed in claim 1, wherein the saw blade body includes noise reducing apertures, the noise reducing apertures for attenuation of the sound level generated during blade use.

8. A saw blade for cutting a fibrous material, comprising:
a body generally circular in shape including a centered aperture and a plurality of teeth, the centered aperture configured to be at least partially received by a saw arbor and the plurality of teeth being disposed around an outer periphery of the body; and
a plurality of tips affixed to the plurality of teeth,
wherein the body and the plurality of teeth are composed of a composite material and the plurality of tips affixed to the plurality of teeth provide a cutting edge capable of cutting fibrous material.

9. The saw blade as claimed in claim 8, wherein the composite material for the body and plurality of teeth is selected from the group consisting of a polymeric material reinforced with glass fibers and a polymeric material reinforced with carbon fibers.

10. The saw blade as claimed in claim 8, wherein the body includes heat expansion slots, the heat expansion slots are disposed around the outer periphery of saw blade body for allowing the saw blade to expand during operation.

11. The saw blade as claimed in claim 8, the saw blade body includes noise reducing apertures, the noise reducing apertures for attenuation of the sound level generated during blade use.

12. The saw blade as claimed in claim 8, wherein the plurality of tips are carbide tips.

13. The saw blade as claimed in claim 12, wherein the plurality of carbide tips are attached to the plurality of teeth via an adhesive.

14. The saw blade as claimed in claim 12, wherein the plurality of carbide tips are attached to the plurality of teeth via sonic welding.

15. A method of manufacturing a saw blade, comprising:
forming a mold configured to generate a saw blade including a main body generally circular in shape and a plurality of teeth disposed around an outer periphery of the main body for providing a cutting edge, the mold providing a main body which includes at least a centered aperture configured to be received by a saw arbor;
selecting a composite material for the main body of the saw blade, the composite material including two or more structurally complementary substances in which one of the two or more structurally complementary substances is a polymeric material; and
placing the composite material within the mold to form a composite saw blade in which the plurality of teeth are integral to the main body of the saw blade.

16. The method of manufacturing as claimed in claim 15, further comprising attaching a plurality of carbide tips to the plurality of teeth via sonic welding.

17. The method of manufacturing as claimed in claim 15, further comprising attaching a plurality of carbide tips to the plurality of teeth via an adhesive.

18. The method of manufacturing as claimed in claim 15, wherein the composite material for the main body and plurality of teeth is a polymeric material reinforced with glass fibers.

19. The method of manufacturing as claimed in claim 15, wherein the composite material for the main body and plurality of teeth is a polymeric material reinforced with carbon fibers.

20. The method of manufacturing as claimed in claim 15, wherein the mold provides a main body which includes noise reduction apertures in addition to the centered aperture, the noise reduction apertures allowing the amount of noise generated by the blade during operation to be reduced.
